# EUROPÄISCHE PATENTANMELDUNG

(11) **EP 3 796 118 A1**
(43) Veröffentlichungstag der Anmeldung: **24.03.2021**
(21) Anmeldenummer: 19198054.9
(22) Anmeldetag: 18.09.2019
(51) Int. Cl.: G05B 23/02

(54) **UNTERSTÜTZUNG FÜR ANLAGENFAHRER DURCH KÜNSTLICHE INTELLIGENZ**

(71) Anmelder: Siemens Aktiengesellschaft, 80333 München (DE)
(72) Erfinder: Albuquerque, Carlos, 76137 Karlsruhe (DE); Augustin, Martin, 76227 Karlsruhe (DE); Ens, Wolfgang, 76351 Linkenheim (DE)

(57) **Zusammenfassung**

Eine künstliche Intelligenz (10) nimmt Eingaben (E) für eine industrielle technische Anlage (1) und Zustände (Z) der industriellen technischen Anlage (1) entgegen. Sie ermittelt ihr bekannte, zu den entgegengenommenen Eingaben (E) und Zuständen (Z) einschließlich deren zeitlichen Verlauf ähnliche Eingaben (E) und Zustände (Z) einschließlich deren zeitlichen Verlauf. Den bekannten Eingaben (E) und Zuständen (Z) einschließlich deren zeitlichen Verlauf sind jeweils ein Bedienvorschlag (V) und eine auf den Bedienvorschlag (V) bezogene Bewertung (B) zugeordnet. Die künstliche Intelligenz (10) ermittelt auf Basis der ihr bekannten Eingaben (E) und Zustände (Z) einschließlich deren zeitlichen Verlauf und den zugeordneten Bedienvorschlägen (V) und Bewertungen (B) einen auszuführenden Bedienvorschlag (V) und gibt den auszuführenden Bedienvorschlag (V) einschließlich dessen Bewertung (B) an eine Bedienperson (9) für die industrielle technische Anlage (1) aus. Sie nimmt von der Bedienperson (9) eine Information (I) darüber entgegen, dass die Bedienperson (9) den auszuführenden Bedienvorschlag (V) ausgeführt hat. Sie nimmt weiterhin eine Bewertung (B') des nunmehr ausgeführten Bedienvorschlags (V) entgegen oder ermittelt eine derartige Bewertung (B') und führt die den ihr bekannten Eingaben (E) und Zuständen (Z) einschließlich deren zeitlichen Verlauf zugeordneten Bedienvorschläge (V) und Bewertungen (B) anhand der Bewertung (B') des ausgeführten Bedienvorschlags (V) nach.

## Beschreibung

Die vorliegende Erfindung betrifft ein Unterstützungsverfahren für den Betrieb einer industriellen technischen Anlage.

Industrielle technische Anlagen sind in den verschiedensten Ausgestaltungen und Größenordnungen bekannt. Sie umfassen kleine Anlagen wie beispielsweise Werkzeugmaschinen und reichen bis zu großen Anlagen wie beispielsweise Kraftwerken, Chemieanlagen, Papierfabriken und anderen mehr.

Insbesondere bei größeren Anlagen ergibt sich in erheblichem Umfang eine Wechselwirkung verschiedener ergriffener Maßnahmen, wobei die Wechselwirkungen oftmals nicht leicht durchschaubar sind und sogar von erfahrenen Bedienpersonen oftmals eher intuitive Maßnahmen und Steuereingriffe erfolgen, wobei auch die erfahrenen Bedienpersonen manchmal nicht genau sagen können, warum sie eine bestimmte Maßnahme ergriffen haben.

Die Problematik, die "richtige" Maßnahme zu ergreifen, stellt sich in noch größerem Umfang bei unerfahrenen oder nicht vollständig geschulten Bedienpersonen. Hier erfolgt oftmals ein Rückgriff auf Handbücher und allgemeine Schemata. Dies ist umständlich und vor allem auch zeitraubend und suboptimal.

Die Aufgabe der vorliegenden Erfindung besteht darin, eine Möglichkeit zu schaffen, mittels derer der Betrieb einer industriellen technischen Anlage auf relativ einfache Art und Weise optimiert werden kann.

Die Aufgabe wird durch ein Unterstützungsverfahren mit den Merkmalen des Anspruchs 1 gelöst. Vorteilhafte Ausgestaltungen des Unterstützungsverfahrens sind Gegenstand der abhängigen Ansprüche 2 bis 5.

Erfindungsgemäß wird ein Unterstützungsverfahren für den Betrieb einer industriellen technischen Anlage geschaffen, bei dem eine künstliche Intelligenz
- Eingaben für die industrielle technische Anlage und Zustände der industriellen technischen Anlage entgegennimmt,
- ihr bekannte, zu den entgegengenommenen Eingaben und Zuständen einschließlich deren zeitlichen Verlauf ähnliche Eingaben und Zustände einschließlich deren zeitlichen Verlauf ermittelt, wobei den bekannten Eingaben und Zustände einschließlich deren zeitlichen Verlauf jeweils ein Bedienvorschlag und eine auf den Bedienvorschlag bezogene Bewertung zugeordnet sind,
- auf Basis der ihr bekannten ähnlichen Eingaben und Zustände und den zugeordneten Bedienvorschlägen und Bewertungen einen auszuführenden Bedienvorschlag ermittelt und den auszuführenden Bedienvorschlag einschließlich dessen Bewertung an eine Bedienperson für die industrielle technische Anlage ausgibt,
- von der Bedienperson eine Information darüber entgegennimmt, dass die Bedienperson den auszuführenden Bedienvorschlag ausgeführt hat,
- eine Bewertung des nunmehr ausgeführten Bedienvorschlags ermittelt oder entgegennimmt und
- die den ihr bekannten Eingaben und Zuständen einschließlich deren zeitlichen Verlauf zugeordneten Bedienvorschläge und Bewertungen anhand der Bewertung des ausgeführten Bedienvorschlags nachführt.

Die Zustände der industriellen technischen Anlage können insbesondere einem Automatisierungssystem der industriellen technischen Anlage vorgegebene Sollgrößen, von Sensoren erfasste korrespondierende Istgrößen und andere Messwerte und/oder daraus abgeleitete Werte umfassen. Alternativ oder zusätzlich können die Zustände der industriellen technischen Anlage von der Bedienperson der industriellen technischen Anlage bereitgestellte Informationen über von der Bedienperson ergriffene Maßnahmen umfassen.

Vorzugsweise berücksichtigt die künstliche Intelligenz beim Nachführen der den ihr bekannten Eingaben und Zuständen einschließlich deren zeitlichen Verlauf zugeordneten Bedienvorschläge und Bewertungen KPIs und/oder MROs.

Besonders bevorzugt ist es, wenn die künstliche Intelligenz
- ein Ähnlichkeitsmaß der Eingaben für die industrielle technische Anlage und Zustände der industriellen technischen Anlage einschließlich deren zeitlichen Verlauf mit den ihr bekannten Eingaben für die industrielle technische Anlage und Zuständen der industriellen technischen Anlage einschließlich deren zeitlichen Verlauf ermittelt und
- als auszuführenden Bedienvorschlag für die industrielle technische Anlage mindestens einen der zugehörigen Bedienvorschläge und dessen Bewertung als auszuführenden Bedienvorschlag oder zusätzlich zu dem auszuführenden Bedienvorschlag an die Bedienperson ausgibt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigt in schematischer Darstellung:

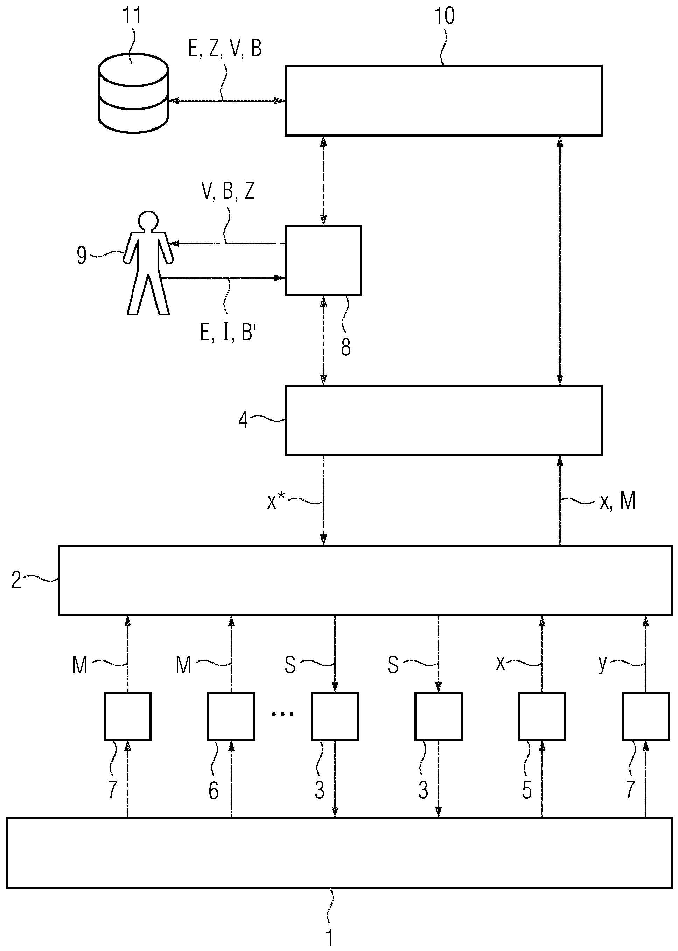

- FIG 1: eine industrielle technische Anlage und zugehörige Komponenten.

Gemäß FIG 1 wird eine industrielle technische Anlage 1 von (mindestens) einem Automatisierungssystem 2 gesteuert. Die industrielle technische Anlage 1 kann beispielsweise eine Chemieanlage, eine Papierherstellungsanlage, ein Kraftwerk oder eine andere größere Anlage sein. Das Automatisierungssystem 2 gibt Stellgliedern 3 (beispielsweise Ventilen, Heizelementen, Pumpen usw.) entsprechende Stellgrößen S vor. Das Automatisierungssystem 2 ermittelt die Stellgrößen S in der Regel mittels Regelkreisen (nicht dargestellt), für die jeweils von einem übergeordneten Prozessleitsystem 4 ein Sollwert x* ermittelt und dem Automatisierungssystem 2 vorgegeben wird. Zugehörige Istwerte x werden mittels Sensoren 5 erfasst und dem jeweiligen Regelkreis zugeführt. Weiterhin können mittels Messeinrichtungen 6 - unabhängig von Regelkreisen - weitere Messgrößen M erfasst werden.

Sollwerte x* und Istwerte x korrespondieren miteinander in dem Sinne, dass ein Istwert x durch die zugehörige Stellgröße S auf den jeweils korrespondierenden Sollwert x* geregelt werden soll. Ein Beispiel eines Sollwertes x* und des zugehörigen Istwertes x ist eine Drehzahl eines Antriebs. Messwerte M sind andere Werte, die nicht geregelt werden. Messwerte M können beispielsweise Diagnosewerte, pneumatische Leckagewerte von Ventilen, Temperaturen von Geräten (auch elektronischen Geräten), Spitzenwerte, die während einer bestimmten Betriebsphase auftreten, ein Hängen von mechanischen Stellgliedern (beispielsweise Ventilen) und andere mehr sein. Ein Beispiel eines derartigen Messwerts M ist die Lagertemperatur einer elektrischen Maschine eines Antriebs oder eine in einem Umrichter einer elektrischen Maschine auftretende Temperatur oder ein Ausmaß einer Vibration. Istgrößen x und Messwerte M können beispielsweise von Feldmessgeräten 7 erfasst werden.

Das Prozessleitsystem 4 kommuniziert über ein Bedien- und Beobachtungssystem 8 mit einer Bedienperson 9. Das Prozessleitsystem 4 gibt über das Bedien- und Beobachtungssystem 8 Zustände Z der industriellen technischen Anlage 1 an die Bedienperson 9 aus und nimmt über das Bedien- und Beobachtungssystem 8 Eingaben E für die industrielle technische Anlage 1 entgegen. Die Zustände Z der industriellen technischen Anlage 1 können die Sollgrößen x* und/oder die Istgrößen x und/oder die Messwerte M und/oder daraus abgeleitete Werte umfassen. Die Zustände Z der industriellen technischen Anlage 1 können gegebenenfalls auch Informationen umfassen, die der industriellen technischen Anlage 1 von der Bedienperson 9 bereitgestellt werden, also beispielsweise die Eingaben E oder auch Informationen über von der Bedienperson 9 anderweitig vorgenommene oder ergriffene Maßnahmen.

In Abhängigkeit von den Zuständen Z der industriellen technischen Anlage 1 ermittelt das Prozessleitsystem 4 weiterhin abgeleitete Größen, beispielsweise Diagnosen, Warnmeldungen (beispielsweise wegen einer Annäherung an eine kritische Temperatur), Alarmmeldungen (beispielsweise wegen Überschreitung einer kritischen Temperatur), Wartungshinweise und andere mehr. Die Eingaben E der Bedienperson 9 sind im einfachsten Fall Stelleingriffe, also die explizite Vorgabe neuer Sollwerte x* oder die Vorgabe von Werten, aufgrund derer die Sollwerte x* ermittelt werden. Es kann sich aber auch um andere Maßnahmen handeln, beispielsweise um Quittierungen von Meldungen oder um Bewertungen von Anlagenzuständen. Auch kann es sich um die Information handeln, dass bestimmte Handlungen ausgeführt sind, beispielsweise eine Wartungsmaßnahme vorgenommen wurde.

Eine künstliche Intelligenz 10 ist mit dem Prozessleitsystem 4 und/oder dem Bedien- und Beobachtungssystem 8 verbunden. Die künstliche Intelligenz 10 kann beispielsweise als neuronales Netzwerk ausgebildet sein. Die vorliegende Erfindung ist aber nicht auf eine derartige Ausgestaltung beschränkt.

Die künstliche Intelligenz 10 nimmt die Eingaben E und die Zustände Z der industriellen technischen Anlage 1 (beispielsweise ein Zuschalten oder Abschalten von Anlagenteilen) entgegen. Sie wertet die entgegengenommenen Eingaben E und Zustände Z aus. Die Auswertung kann anhand der aktuellen, momentanen Eingaben E und Zustände Z erfolgen. In vielen Fällen wird jedoch der zeitliche Verlauf der Eingaben E und Zustände Z ausgewertet.

Im Rahmen der Auswertung kann die künstliche Intelligenz 10 oftmals unter anderem auf eine Datenbank 11 zugreifen. In der Datenbank 11 können beispielsweise Bewertungen B gespeichert sein, die bestimmten Eingaben E und Zuständen Z einschließlich deren zeitlichen Verlauf zugeordnet sind. Insbesondere können die Bewertungen B bestimmten Kombinationen von zeitlichen Verläufen der Eingaben E und Zustände Z zugeordnet sein.

Im Rahmen der Auswertung ermittelt die künstliche Intelligenz 10 ihr bekannte - beispielsweise in der Datenbank 11 gespeicherte - ähnliche Eingaben E und Zustände Z einschließlich deren zeitlichen Verlauf, die ähnlich zu den entgegengenommenen Eingaben E und Zuständen Z einschließlich deren zeitlichen Verlauf sind. Den bekannten Eingaben E und Zuständen Z einschließlich deren zeitlichen Verlauf sind weiterhin jeweils ein Bedienvorschlag V und eine auf den Bedienvorschlag V bezogene Bewertung B zugeordnet.

Auf Basis der Auswertung, also auf Basis der ihr bekannten Eingaben E und Zustände Z einschließlich deren zeitlichen Verlauf und den zugeordneten Bedienvorschlägen V und Bewertungen B, ermittelt die künstliche Intelligenz 10 einen auszuführenden Bedienvorschlag V. Den auszuführenden Bedienvorschlag V einschließlich dessen Bewertung B gibt die künstliche Intelligenz 10 an die Bedienperson 9 aus. Beispielsweise kann die künstliche Intelligenz 10 mindestens eine der folgenden Bedienvorschläge V an die Bedienperson 9 ausgeben:
- eine Empfehlung, einen Funktionstest für bestimmte Systeme und Einheiten der industriellen technischen Anlage 1 vorzunehmen;
- eine Empfehlung, das Vorhandensein bestimmter Einheiten der industriellen technischen Anlage 1 zu überprüfen;
- Ersatzteile für die industrielle technische Anlage 1 zu bestellen;
- bestimmte Elemente der industriellen technischen Anlage 1 (beispielsweise Stellglieder 3, Sensoren 5, Messeinrichtungen 6 oder Feldgeräte 7) zu kalibrieren;
- einen Serviceplan, also welche Wartungsmaßnahmen an der industriellen technischen Anlage 1 vorgenommen werden sollen;
- einen Servicezeitplan, also welche Wartungsmaßnahmen an der industriellen technischen Anlage 1 in welchem Zeitraum oder zu welchem Zeitpunkt vorgenommen werden sollen.

Zum Ermitteln des auszuführenden Bedienvorschlags V kann die künstliche Intelligenz 10 beispielsweise die Eingaben E und die Zustände Z einschließlich deren zeitlichen Verlauf mit denjenigen Eingaben E und Zuständen Z einschließlich deren zeitlichen Verlauf vergleichen, die ihr bekannt sind (beispielsweise in der Datenbank 11 abgespeichert sind). Anhand des Vergleichs kann die künstliche Intelligenz 10 ein entsprechendes Ähnlichkeitsmaß ermitteln. Weiterhin ermittelt die künstliche Intelligenz 10 für die ihr bekannten, hinreichend ähnlichen Eingaben E und Zustände Z den zugehörigen Bedienvorschlag V und dessen Bewertung B. Übersteigt das Ähnlichkeitsmaß ein Mindestmaß, wird der entsprechende aufgefundene Bedienvorschlag V zusammen mit der zugehörigen Bewertung B an die Bedienperson 9 ausgegeben. Übersteigt weiterhin auch die Bewertung B ein Mindestmaß, kann dieser Bedienvorschlag V zusammen mit seiner Bewertung B als auszuführender Bedienvorschlag V an die Bedienperson 9 ausgegeben werden. Anderenfalls kann die künstliche Intelligenz 10 diesen Bedienvorschlag V und dessen Bewertung B zwar ebenfalls an die Bedienperson 9 ausgeben. In diesem Fall - wenn also die Bewertung B das Mindestmaß nicht übersteigt - erfolgt die Ausgabe aber zusätzlich zu dem auszuführenden Bedienvorschlag V.

Die künstliche Intelligenz 10 nimmt weiterhin von der Bedienperson 9 eine Information I darüber entgegen, dass die Bedienperson 9 den auszuführenden Bedienvorschlag V ausgeführt hat. Beispielsweise kann die künstliche Intelligenz als Information I eine einfache Bestätigung, ein Kalibrierungsprotokoll oder einen Bericht entgegennehmen. Weiterhin nimmt die künstliche Intelligenz 10 von der Bedienperson 9 eine Bewertung B' des nunmehr ausgeführten Bedienvorschlags V entgegen. Insbesondere anhand der Bewertung B' kann die künstliche Intelligenz 10 die Qualität ihres Bedienvorschlags V beurteilen. Anhand der Bewertung B' des ausgeführten Bedienvorschlags V führt die künstliche Intelligenz 10 daher die den Eingaben E und Zuständen Z einschließlich deren zeitlichen Verlauf zugeordneten Bedienvorschläge V und Bewertungen B nach. Alternativ zu einer Vorgabe der Bewertung B' durch die Bedienperson 9 ist es möglich, dass die künstliche Intelligenz 10 die Bewertung B' anhand von KPIs (KPI = key performance indicator) und/oder MROs (maintenance and repair order) ermittelt oder diese Größen zusätzlich zu einer von der Bedienperson 9 vorgegebenen Bewertung B' berücksichtigt.

Die vorliegende Erfindung weist viele Vorteile auf. Insbesondere kann auf einfache Weise eine zuverlässige und stabile Fahrweise komplexer industrieller technischer Anlagen 1 erreicht werden. Weiterhin kann mittels der künstlichen Intelligenz 10 ein anlagenweiter Sollwertgenerator realisiert werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: industrielle technische Anlage
- 2: Automatisierungssystem
- 3: Stellglieder
- 4: Prozessleitsystem
- 5: Sensoren
- 6: Messeinrichtungen
- 7: Feldmessgeräte
- 8: Bedien- und Beobachtungssystem
- 9: Bedienperson
- 10: künstliche Intelligenz
- 11: Datenbank

- B, B': Bewertungen
- E: Eingaben für die industrielle technische Anlage
- I: Informationen
- M: Messgrößen
- S: Stellgrößen
- V: Bedienvorschläge
- x*: Sollwerte
- x: Istwerte
- Z: Zustände der industriellen technischen Anlage

## Patentansprüche

1. Unterstützungsverfahren für den Betrieb einer industriellen technischen Anlage (1),
- wobei eine künstliche Intelligenz (10) Eingaben (E) für die industrielle technische Anlage (1) und Zustände (Z) der industriellen technischen Anlage (1) entgegennimmt,
- wobei die künstliche Intelligenz (10) ihr bekannte, zu den entgegengenommenen Eingaben (E) und Zuständen (Z) einschließlich deren zeitlichen Verlauf ähnliche Eingaben (E) und Zustände (Z) einschließlich deren zeitlichen Verlauf ermittelt, wobei den bekannten Eingaben (E) und Zuständen (Z) einschließlich deren zeitlichen Verlauf jeweils ein Bedienvorschlag (V) und eine auf den Bedienvorschlag (V) bezogene Bewertung (B) zugeordnet sind,
- wobei die künstliche Intelligenz (10) auf Basis der ihr bekannten Eingaben (E) und Zustände (Z) einschließlich deren zeitlichen Verlauf und den zugeordneten Bedienvorschlägen (V) und Bewertungen (B) einen auszuführenden Bedienvorschlag (V) ermittelt und den auszuführenden Bedienvorschlag (V) einschließlich dessen Bewertung (B) an eine Bedienperson (9) für die industrielle technische Anlage (1) ausgibt,
- wobei die künstliche Intelligenz (10) von der Bedienperson (9) eine Information (I) darüber entgegennimmt, dass sie den auszuführenden Bedienvorschlag (V) ausgeführt hat,
- wobei die künstliche Intelligenz (10) eine Bewertung (B') des nunmehr ausgeführten Bedienvorschlags (V) ermittelt oder entgegennimmt und
- wobei die künstliche Intelligenz (10) die den ihr bekannten Eingaben (E) und Zuständen (Z) einschließlich deren zeitlichen Verlauf zugeordneten Bedienvorschläge (V) und Bewertungen (B) anhand der Bewertung (B') des ausgeführten Bedienvorschlags (V) nachführt.

2. Unterstützungsverfahren nach Anspruch 1,
**dadurch gekennzeichnet,**
**dass** die Zustände (Z) der industriellen technischen Anlage (1) einem Automatisierungssystem (2) der industriellen technischen Anlage (1) vorgegebene Sollgrößen (x*), von Sensoren (5) erfasste korrespondierende Istgrößen (x) und andere Messwerte (M) und/oder daraus abgeleitete Werte umfassen.

3. Unterstützungsverfahren nach Anspruch 1 oder 2,
**dadurch gekennzeichnet,**
**dass** die Zustände (Z) der industriellen technischen Anlage (1) von der Bedienperson (9) der industriellen technischen Anlage (1) bereitgestellte Informationen (I) über von der Bedienperson (9) ergriffene Maßnahmen umfassen.

4. Unterstützungsverfahren nach Anspruch 1, 2 oder 3,
**dadurch gekennzeichnet,**
**dass** die künstliche Intelligenz (1) beim Nachführen der den ihr bekannten Eingaben (E) und Zuständen (Z) einschließlich deren zeitlichen Verlauf zugeordneten Bewertungen (B) KPIs und/oder MROs berücksichtigt.

5. Unterstützungsverfahren nach einem der obigen Ansprüche,
**dadurch gekennzeichnet,**
- **dass** die künstliche Intelligenz (10) ein Ähnlichkeitsmaß der Eingaben (E) für die industrielle technische Anlage (1) und Zustände (Z) der industriellen technischen Anlage (1) einschließlich deren zeitlichen Verlauf mit den ihr bekannten Eingaben (E) für die industrielle technische Anlage (1) und Zuständen (Z) der industriellen technischen Anlage (1) einschließlich deren zeitlichen Verlauf ermittelt und
- **dass** die künstliche Intelligenz (10) als auszuführenden Bedienvorschlag (V) für die industrielle technische Anlage (1) mindestens einen der zugehörigen Bedienvorschläge (V) und dessen Bewertung (B) als auszuführenden Bedienvorschlag (V) oder zusätzlich zu dem auszuführenden Bedienvorschlag (V) an die Bedienperson (9) ausgibt.
